Europäisches Patentamt

European Patent Office

Office européen des brevets

(11) Veröffentlichungsnummer: **0 034 709**
A2

(12) **EUROPÄISCHE PATENTANMELDUNG**

(21) Anmeldenummer: 81100481.1

(22) Anmeldetag: 23.01.81

(51) Int. Cl.³: **C 08 F 220/18**
C 09 J 3/14

(30) Priorität: 31.01.80 DE 3003438

(43) Veröffentlichungstag der Anmeldung:
02.09.81 Patentblatt 81/35

(84) Benannte Vertragsstaaten:
AT BE CH DE FR GB IT LI NL SE

(71) Anmelder: Henkel Kommanditgesellschaft auf Aktien
-Patentabteilung- Postfach 1100 Henkelstrasse 67
D-4000 Düsseldorf 1(DE)

(72) Erfinder: Gruber, Werner, Dr.
Oppelner Weg 7
D-4000 Düsseldorf 12(DE)

(54) Anaerob härtende Klebstoffe und Dichtungsmassen.

(57) auf Basis von (Meth)acrylsäureestern und organischen Hydroperoxidinitiatoren enthalten als Polymerisationsbeschleuniger Malonsäuredinitril in Mengen von 0,01 bis 10 Gewichtsprozent, bezogen auf (Meth)acrylsäureester und zweckmäßig als Hilfsbeschleuniger ein organisches Amin wie 0,1 bis 1,5 Gewichtsprozent Tributylamin. Man erhält in kurzer Zeit kraftschlüssige Verbindungen. Es findet keine Beeinflussung der Lagerstabilität der Klebstoffe beziehungsweise Dichtungsmassen in teilweise gefüllten Flaschen bei relativ geringem Sauerstoffpartialdruck statt.

EP 0 034 709 A2

COMPLETE DOCUMENT

Dr.SchOe/Rs

P a t e n t a n m e l d u n g

D 6110 EP

"Anaerob härtende Klebstoffe und Dichtungsmassen"

Die Erfindung betrifft unter Sauerstoffausschluß beschleunigt erhärtende Systeme auf Basis von (Meth)-acrylsäureestern und organischen Hydroperoxiden, die als anaerobe Klebstoffe, Dichtungsmittel und dergleichen bekannt sind. Sie werden vorzugsweise in lösungsmittelfreier Form für die genannten Zwecke verwendet.

Als wesentliche Bestandteile enthalten diese Systeme monomere oder oligomere (Meth)-acrylsäureester von ein- oder mehrwertigen Alkoholen sowie Peroxid beziehungsweise Hydroperoxid. Damit bei Ausschluß von Sauerstoff eine genügend schnelle Härtung einsetzt, fügt man den Systemen Beschleuniger zu.

Es ist bekannt, als Beschleuniger bestimmte Schwefel und/oder Stickstoff enthaltende organische Verbindungen zu verwenden. Mit derartigen Verbindungen erzielt man nach nicht allzu langer Zeit eine Festigkeit, die das Hantieren mit den verbundenen Gegenständen erlaubt. Sie wird meist nach der sogenannten Handfestigkeitsprüfung beurteilt. Zur Durchführung der Probe werden mehrere Tropfen der anaerob härtenden Massen zum Beispiel auf die Gewindegänge einer entfetteten Schraube aufgebracht und diese anschließend mit der dazugehörenden Mutter verschraubt.

D 6110 EP — 2 — 0034709

Von Zeit zu Zeit wird die Mutter etwas gegen die Schraube gedreht und die Zeit bestimmt, bis sich die Mutter nicht mehr von Hand drehen läßt, sie wird als Maß für die Handfestigkeit verwendet.

Von größerer Aussagekraft für den Einsatz der anaerob härtenden Klebstoffe oder Dichtungsmittel ist aber die Zeit, die benötigt wird, bis eine Drehkraft von mindestens 500 Ncm zum Aufdrehen der verklebten Schrauben notwendig ist.

Aufgabe der vorliegenden Erfindung war es, solche Beschleuniger zu finden, die nach Zusammenfügen der zu verbindenden Teile sehr schnell zu einer kraftschlüssigen Verbindungen führen, darüber hinaus aber nicht die Lagerbeständigkeit der Klebstoffe bzw. Dichtungsmittel ungünstig beeinflussen.

Erfindungsgemäß enthalten die neuen anaerob härtenden Klebstoff- und Dichtungssysteme auf Basis von (Meth)-acrylsäureestern Malonsäuredinitril.

Zweckmäßig wird Malonsäuredinitril in einer Menge von 0,01 bis 10 Gewichtsprozent, insbesondere 0,1 bis 5 Gewichtsprozent, bezogen auf die (Meth)acrylsäureester, eingesetzt.

Das erfindungsgemäß einzusetzende Malonsäuredinitril lässt sich prinzipiell in allen sogenannten anaerob härtenden Klebstoffen und Dichtungsmassen verwenden. Derartige Systeme sind aufgebaut beispielsweise aus (Meth)-acrylsäureestern von mehrwertigen Alkoholen, wie Ethylenglycol, Diethylenglycol, Triethylenglycol, Tetraethylenglycol, Polyethylenglycol, Glycerin, Pentandiol,

/3

Di-, Tri- oder Tetrapropylenglycol oder auch den (Meth)-acrylsäureestern von isomeren Di-(hydroxymethyl)-tricyclodecanen bzw. deren Derivaten, welche durch Umsetzung mit Dicarbonsäureanhydriden im Molverhältnis 1 : 2 und anschließende vollständige Reaktion der Carboxylgruppen mit Glycidylmethacrylat herstellbar sind (Vergleiche DE-PS 27 14 538). Weiterhin kommen infrage (Meth)-acrylsäureester von Tetrahydrofurfurylalkohol oder Cyclopentanol oder Cyclohexanol. Eine weitere Gruppe anaerob härtender Klebstoffe stellen die Umsetzungsprodukte aus Glycidylethern mehrwertiger Phenole mit Acrylsäure bzw. Methacrylsäure dar.

Als Monomere kommen weiterhin die Di(meth)acrylsäureester von oxethyliertem oder propoxyliertem Diphenylolpropan sowie die Umsetzungsprodukte von Bishalbestern der Diole wie Butindiol und andere mit Glycidylmethacrylat entsprechend DE-AS 26 07 962 infrage.

Ein weiterer wesentlicher Bestandteil der anerob härtenden Systeme sind die Peroxidinitiatoren. Es handelt sich hier in erster Linie um Hydroperoxide, die sich von Kohlenwasserstoffen ableiten, welche eine Kettenlänge von 3 bis 18 Kohlenstoffatomen aufweisen. Beispielsweise sind geeignet Cumolhydroperoxid, tert.-Butylhydroperoxid, Methylethylketonhydroperoxid, Diisopropylbenzolhydroperoxid. Weiter sind auch solche Peroxide geeignet, die bei einer Temperatur zwischen etwa 80 und 140$^{\circ}$C eine Halbwertzeit von 10 Stunden haben. Demnach kommen in Betracht tert.-Butylperbenzoat, Di-tert.-butyldiperoxyphthalat, 2.5-Dimethyl-2.5-bis-(tert.-butylperoxy)-hexan, Bis-(1-hydroxy-cyclhexyl)-peroxid, tert.-Butylperoxyacetat, 2.5-Dimethylhexyl-2.5-di-(peroxybenzoat), tert.-Butylvaleroylperoxid, 2.2-Bis-(tert.-butylperoxy)-butan und Di-tert.-butylperoxid. Selbstverständlich kommen auch Gemische von Initiatoren auf Basis Peroxid und Hydroperoxid infrage.

/4

Die Peroxide sollen in einer Menge von 0,1 bis 20 %, insbesondere 1,0 bis 10 %, bezogen auf das Gesamtgemisch, vorhanden sein. Sie werden meist als phlegmatisierte Lösungen oder Pasten eingesetzt, d.h. mit einem relativ geringen Gehalt an inerten Substanzen wie Dimethylphthalat oder Cumol. Auch kann ein Zusatz von sogn. Inhibitoren wie etwa Phenothiazin in untergeordneter Menge wie 50 bis 300 ppm sinnvoll sein.

Gemäß einer weiteren bevorzugten Ausführungsform der vorliegenden Erfindung kann zusätzlich ein organisches Amin als Hilfsbeschleuniger zusammen mit den erfindungsgemäßen Beschleunigern verwendet werden. Als Hilfsbeschleuniger seien N.N-Dimethyl-o-toluidin, N.N-Dimethyl-p-toluidin und Tri-n-butylamin erwähnt. Sie sollen nur in untergeordneter Menge von 0,1 bis maximal 1,5 Gewichtsprozent verwendet werden.

Schließlich können den erfindungsgemäßen Klebstoffen und Dichtungsmitteln auch Verdickungsmittel, Weichmacher, anorganische Füllstoffe und Farbstoffe zugesetzt werden. Als Verdickungsmittel sind geeignet polymere Verbindungen, wie etwa Polymethylmethacrylat, Polyethylacrylat, Polystyrol, Polyvinylchlorid, synthetischer Kautschuk und dergleichen. Als Füllstoffe eignen sich beispielsweise feinverteiltes Siliciumdioxid, Silikate, Bentonite, Calciumcarbonat, Titandioxid.

Die erfindungsgemäßen Klebstoffe und Dichtungsmassen lassen sich in nur teilweise gefüllten Flaschen aus Glas, Polyethylen oder dergleichen monatelang unverändert aufbewahren. Ein relativ geringer Sauerstoffpartialruck ist ausreichend, um die Polymerisation zu inhibieren. Es hat sich, wie in anderen Fällen, auch hier als zweckmäßig erwiesen, die Flaschen so einzufärben, daß kurzwelliges Licht ferngehalten wird. Die Stabilität wird daher günstig beeinflußt. Auch kann eine Stabilisierung in bekannter Weise durch Zusatz organischer Persäuren wie Peressigsäure erfolgen.

Die anaerob härtenden Klebstoffe finden in der Technik Anwendung zum Verkleben von Blechen bzw. Metallteilen aus verschiedensten Materialien oder auch zur Befestigung von Gewinden, zum Abdichten von Rohrverbindungen und dergleichen mehr. Durch die erfindungsgemäße Kombination ist es nicht erforderlich, auch bei relativ inaktiven Metalloberflächen noch einen zusätzlichen Beschleuniger aufzubringen. Selbstverständlich ist es möglich, auch mit an sich bekannten Hilfsmitteln, beispielsweise durch geringes Erwärmen, die Aushärtung zu beschleunigen.

Im allgemeinen werden bei Anwendung der erfindungsgemäßen anaeroben Klebstoffe bereits nach wenigen Minuten sogenannte handfeste Verbindungen erreicht. Hervorzuheben ist, daß die Zeit zur Erreichung einer wirklichen Festigkeit, die eine praktische Handhabung ermöglicht, nämlich ein Drehkraftmoment von mindestens 500 Ncm zum Aufdrehen von Schraubverbindungen, zwischen ca. 10 und 30 Minuten liegt.

Die neuen anerob härtenden Klebstoffe wurden untersucht auf:

A) Handfestigkeit

B) Zeitdauer bis zum Erreichen eines Drehmoments von 500 Ncm

C) Festigkeit nach 60 Minuten und 24 Stunden

D) Stabilität.

A)  Handfestigkeitsprüfung

Bei der Handfestigkeitsprüfung werden mehrere Tropfen der anaerob härtenden Masse auf die Gewindegänge
einer entfetteten Messingschraube (M 10 x 30 DIN
933) aufgebracht und anschließend mit der dazugehörenden Mutter zusammengeschraubt. Von Zeit zu Zeit
wird die Mutter etwas gegen die Schraube gedreht, um
festzustellen, von welcher Zeit an die Mutter sich
nicht mehr ohne besondere Kraftanstrengung von Hand
auf der Schraube drehen läßt. Die bis dahin verstrichene Zeitspanne wird als Maß für die Handfestigkeit angesehen.

B)  Zeitdauer bis zum Erreichen eines Drehmoments von
    wenigstens 500 Ncm

Die Festigkeitsprüfung wird an entfetteten Eisenschrauben (M 10 x 30 DIN 933 - 8.8) und Muttern
durchgeführt. Nach dem Zusammenfügen der mit einigen
Tropfen Klebstoff versehenen Schraube mit der dazu
passenden Mutter wird in Abständen von einigen Minuten mit einem Drehmomentschlüssel die zum Aufdrehen
der Klebverbindung notwendig Drehkraft bestimmt. Als
Maß für die Festigkeit wird die Zeit angesehen, nach
der eine Drehkraft von 500 Ncm oder mehr gefunden
wurde.

C)  Festigkeit nach 60 Minuten und 24 Stunden

An verklebten Eisenschrauben und Muttern wurde nach
60-minütiger und 24-stündiger Lagerung bei Raumtemperatur mittels eines Drehmomentschlüssels die Drehkraft im Nm bestimmt, die zum Aufdrehen der Klebung
benötigt wird.

Außerdem wurde an verklebten Stahlbolzen und Stahlscheiben nach DIN-Entwurf 54 452 die Druckscherfestigkeit nach 24-stündiger Raumtemperaturaushärtung bestimmt.

**D)** <u>Stabilität</u>

Bei der Stabilitätsprüfung wurde ein 10 cm langes und 10 mm weites Reagenzglas zu 9/10 mit den Mischungen gefüllt und in ein auf 80°C gehaltenes Bad eingehängt. Die Zeitspanne vom Einhängen bis zur ersten Gelbildung wurde gemessen.

Beispiel 1 - 14

Als Monomere für die Herstellung der aneroben Mischungen wurden die folgenden verwendet:

A)Dimethacrylester des Kondensationsproduktes aus Bis(butandiol)maleinsäureester mit Glycidylmethacrylat

B)Dimethacrylester des Kondensationsproduktes aus Bis(dihydroxymethyltricyclo-$\boxed{5.2.1.0}$ 2.6-decan)-maleinsäureester mit Glycidylmethacrylat

C)Ethylenglycoldimethacrylsäureester

D)Polyethylenglycoldimethacrylsäureester

E)Hydroxyethylmethacrylsäureester

Für die Klebstofformulierung wurde mindestens ein Monomeres eingesetzt. Die Zusammensetzung der Mischung ist aus Tabelle 1 ersichtlich. Als Katalysator wurde 70%iges Cumolhydroperoxid in Cumol in einer Menge von 3 Gewichtsanteilen eingesetzt. Alle Mischungen enthielten 200 ppm Phenothiazin als Inhibitor. Die Angaben in der nachfolgenden Tabelle 1 sind Gewichtsanteile.

In der folgenden Tabelle 1 ist in Abhängigkeit von der laufenden Nummer des Beispiel angegeben: die Monomeren sowie eingesetztes Nitril und tert. Amin.

/9

Tabelle 1

| Beispiel | Monomere (Gew.T) | Malonsäure-dinitril (Gew.T) | Tri-n-butylamin (Gew.T) |
|----------|------------------|------------------------------|--------------------------|
| 1)       | A 50<br>C 25<br>E 25 | 0,5 | – |
| 2)       | A 50<br>C 25<br>E 25 | 1,0 | – |
| 3)       | A 50<br>D 50 | 0,5 | – |
| 4)       | A 50<br>C 25<br>E 25 | 0,5 | 0,5 |
| 5)       | B 50<br>C 25<br>E 25 | 0,5 | – |
| 6)       | B 50<br>C 25<br>E 25 | 1,0 | – |
| 7)       | B 50<br>D 50 | 1,0 | – |
| 8)       | B 50<br>C 25<br>E 25 | 1,0 | 0,5 |
| 9)       | D 100 | 1,0 | – |

| Beispiel | Monomere (Gew.T) | Malonsäure-dinitril (Gew.T) | Tri-n-butylamin (Gew.T) |
|---|---|---|---|
| 10) | D 100 | 0,5 | 0,5 |
| 11) | B 50 | 0,1 | - |
|  | E 50 |  |  |
| 12) | D 100 | 0,25 | 0,5 |
| 13 | D 100 | 2,0 | - |

Die Stabilität dieser Klebstoffe entsprechend dem 80° C Temperaturtest, lag in allen Fällen über 30 Minuten.

In der nachfolgenden Tabelle 2 sind in Abhängigkeit von den Beispielen wiedergegeben:

A) Handfestigkeit,

B) Zeitdauer bis zum Erreichen eines Drehmomentes von 500 Ncm,

C) Festigkeit nach 60 Minuten und 24 Stunden.

/11

T a b e l l e   2

| Bei-spiel | Hand-festig-keit Min. | 500 Ncm Drehmo-ment Min. | Drehkraftmoment nach 60 Min. 24 Std. Nm | | Druckscher-festigkeit N/mm2 |
|---|---|---|---|---|---|
| 1 | 1 | 20 | 20 | 50 | 17 |
| 2 | 1 | 20 | 10 | 50 | 20 |
| 3 | 1 | 15 | 15 | 55 | 18 |
| 4 | 1 | 15 | 20 | 50 | 22 |
| 5 | 1 | 20 | 15 | 52 | 18 |
| 6 | 1 | 15 | 20 | 55 | 20 |
| 7 | 1 | 15 | 15 | 45 | 18 |
| 8 | 1 | 20 | 15 | 52 | 17 |
| 9 | 1 | 15 | 20 | 50 | 20 |
| 10 | 1 | 15 | 25 | 55 | 22 |
| 11 | 2 | 30 | 10 | 55 | 20 |
| 12 | 2 | 30 | 12 | 60 | 22 |
| 13 | 1 | 15 | 20 | 45 | 18 |

## Patentansprüche

1. Anaerob härtende Klebstoffe und Dichtungsmassen auf der Basis von (Meth)-acrylsäureestern und organischen Peroxiden, insbesondere Hydroperoxiden, und Stickstoff enthaltenden organischen Verbindungen als Beschleunigr für die Polymerisation sowie üblichen Hilfsstoffen gekennzeichnet durch einen Gehalt an Malonsäuredinitril.

2. Anaerob härtende Klebstoffe und Dichtungsmittel nach Anspruch 1, dadurch gekennzeichnet, daß Malonsäuredinitril in einer Menge von 0,01 bis 10 Gewichtsprozent, insbesondere 0,1 bis 5 Gewichtsprozent, bezogen auf (Meth)acrylsäureester, vorliegt.